## Europäisches Patentamt

## European Patent Office

## Office européen des brevets

(11) Veröffentlichungsnummer: **0 135 497**
A2

(12) **EUROPÄISCHE PATENTANMELDUNG**

(21) Anmeldenummer: **84890174.0**

(22) Anmeldetag: **20.09.84**

(51) Int. Cl.⁴: **A 23 N 17/02**

(30) Priorität: **20.09.83 AT 3341/83**
**23.05.84 AT 1712/84**

(43) Veröffentlichungstag der Anmeldung:
**27.03.85 Patentblatt 85/13**

(84) Benannte Vertragsstaaten:
**BE CH DE FR GB IT LI LU NL SE**

(71) Anmelder: **Scherz, Karl**
**Untere Schmiedgasse 9-12**
**A-8530 Deutschlandsberg(AT)**

(72) Erfinder: **Scherz, Karl**
**Untere Schmiedgasse 9-12**
**A-8530 Deutschlandsberg(AT)**

(74) Vertreter: **Boeckmann, Peter, Dipl.-Ing. et al,**
**Patentanwälte Dipl.-Ing. Peter Boeckmann, Dipl.-Ing. Leo**
**Brauneiss Strohgasse 10**
**A-1030 Wien(AT)**

(54) **Zerkleinerungsvorrichtung, insbesondere für Futtermittel od.dgl.**

(57) Eine Zerkleinerungsvorrichtung, beispielsweise zur Zerkleinerung von Futtermittel oder der für die Erzeugung von Alkohol oder Biosprit verwendeten Ausgangsmaterialien, weist einen Rotor (8) auf, der in einem Gehäuse drehbar gelagert ist. Die Umfangsfläche des Rotors (8) wird von einer gehäusefesten Innenfläche (21) umschlossen, die für das zu zerkleinernde Gut undurchlässig ausgebildet ist. Im Bereich der einen Stirnfläche des Rotors (8) ist ein Einlaß (4) für die Zufuhr des zu zerkleinernden Gutes und im Bereich der dieser Stirnfläche gegenüberliegenden Stirnfläche des Rotors (8) ein Auslaß (37) für die Abfuhr des zerkleinerten Gutes vorgesehen. Dieses zu zerkleinernde Gut wird somit im Zwischenraum zwischen der gehäusefesten Innenfläche (21) und der Umfangsfläche des Rotors (8) fortlaufend von der einlaßseitigen Stirnfläche des Rotors (8) zur auslaßseitigen Stirnfläche des Rotors (8) transportiert und hiebei zerkleinert. An der einlaßseitigen Stirnfläche des Rotors (8) kann eine Vorzerkleinerungseinrichtung (22, 23, 26, 38, 47) vorgesehen sein. Zweckmäßig besteht der Rotor (8) aus mehreren durch Distanzstücke (12) in Abstand voneinander angeordneten scheibenförmigen oder zylinderförmigen Rotorteilen (11), wobei jedem dieser Rotorteile (11) ein gesonderter, entlang einer Ringfläche an der gehäusefesten Innenfläche (21) angeordneter Satz von Leitrippen (56, 58, 66, 68, 70, 72) zugeordnet ist.

./...

Croydon Printing Company Ltd

EP 0 135 497 A2

Fig. 20

Zerkleinerungsvorrichtung,
insbesondere für Futtermittel od. dgl.

Die Erfindung betrifft eine Zerkleinerungsvorrichtung, insbesondere für Futtermittel od. dgl., mit einem an seiner Umfangsfläche Schneiden aufweisenden Rotor, der in einem Gehäuse drehbar gelagert ist, das einen im Bereich der einen Stirnseite des Rotors angeordneten Einlaß und einen Auslaß für das zu zerkleinernde Gut aufweist.

Es sind bereits zahlreiche Zerkleinerungsvorrichtungen für verschiedene Güter, wie beispielsweise Feuchtmais, Kartoffel, Granulate, Getreide, Düngermittel, sowie auch für Halmgut, wie Heu, Stroh, usw., bekannt. Bei diesen bekannten Vorrichtungen erfolgt die Zerkleinerung durch einen in einem Gehäuse angeordneten, Schneiden aufweisenden Rotor, wobei die den Rotorraum begrenzende Gehäusewand ganz oder teilweise aus Siebflächen besteht, durch welche das zerkleinerte Gut hindurchtritt. Vor allem dann, wenn eine feine Zerkleinerung gefordert wird und daher die Sieböffnungen klein sein müssen, weisen diese bekannten Vorrichtungen den Nachteil auf, daß sich diese Sieböffnungen zusetzen, insbesonder wenn das zu zerkleinernde Gut feucht ist. Kleine Sieböffnungen bewirken außerdem, daß die Siebfläche praktisch glatt ist und keine Vorsprünge aufweist, so daß die Durchsatzleistung der Zerkleinerungsvorrichtungen vor allem beim Zerkleinern von feuchtem Gut und bei einer feinen Zerkleinerung auch bei großer Energiezufuhr gering ist.

Die vorliegende Erfindung hat sich zur Aufgabe gestellt, die Nachteile der bekannten Zerkleinerungsvorrichtungen zu vermeiden und eine Zerkleinerungsvorrichtung zu schaffen, mit welcher die Zerkleinerung verschiedenster Güter und mit verschiedenen Feinheitsgraden in optimaler Weise vorgenommen werden kann und welche einen guten Wirkungsgrad aufweist. Die Erfindung geht hiebei aus von einer Zerkleinerungsvorrichtung der eingangs beschriebenen Art und besteht im wesentlichen darin, daß eine die Umfangsfläche des Rotors umschließende gehäusefeste Innenfläche für das zu zerkleinernde Gut undurchlässig ausgebildet ist und daß der Auslaß im Bereich der dem Einlaß gegenüberliegenden Stirnfläche des Rotors angeordnet ist, so daß das zu zerkleinernde Gut vom Einlaß im Zwischenraum zwischen der gehäusefesten Innenfläche und der Umfangsfläche des Rotors fortlaufend zerkleinert und zum Auslaß transportiert wird. Mit der erfindungsgemäßen Vorrichtung wird das über den Einlaß zugeführte, zu zerkleinernde Gut, gegebenenfalls nach einer Vorzerkleinerung, radial entlang der einen Stirnfläche des Rotors nach außen geführt. Das Gut tritt sodann durch den Zwischenraum zwischen der Umfangsfläche des Rotors und der gehäusefesten Innenfläche hindurch und wird hiebei durch die Schneiden zerkleinert und schließlich an der dem Einlaß abgewendeten Stirnfläche des Rotors durch den Auslaß abgeführt, welcher zweckmäßig radial zur Umfangsfläche des Rotors angeordnet ist, um die Zentrifugalkraft für die Abfuhr des zerkleinerten Gutes ausnützen zu können. Auf die beschriebene Weise wird eine sehr starke Zerkleinerung des Gutes während seines Hindurchtretens durch den Zwischenraum zwischen der gehäusefesten Innenfläche und der Umfangsfläche des Rotors bei vergleichsweise geringem Energieaufwand erzielt. Dadurch ist die erfindungsgemäße Vorrichtung auch bei der Alkoholerzeugung aus Kartoffeln, Mais oder ähnlichen Produkten sowie bei der Biospriterzeugung aus Mais, Zuckerhirse od.dgl. anwendbar, wobei durch die Feinstzerkleinerung der Ausgangsprodukte der bisher erforderliche Dämpfprozess umgangen und dadurch der Energieaufwand ganz wesentlich reduziert werden kann.

Vor allem dann, wenn die Rotorwelle der erfindungsgemäßen Vorrichtung im wesentlichen horizontal verläuft, so daß das zu zerkleinernde Gut nicht durch die Schwerkraft durch den Zwischenraum zwischen der Umfangsfläche des Rotors und der gehäusefesten Innenfläche hindurchgeführt wird, ist es zweckmäßig, wenn die Schneiden zumindest teilweise, vorzugsweise zumindest im Bereich der einlaßseitigen Stirnfläche des Rotors schräg zur Rotorachse verlaufen, z.B. mit einer Normalebene auf die Rotorachse einen spitzen Winkel einschließen, da in diesem Fall durch die Schrägstellung der Schneiden während der Umdrehung des Rotors auch eine Weiterbeförderung des zu zerkleinernden Gutes durch den Zwischenraum in Achsrichtung erfolgt. Bei Vorrichtungen mit vertikaler Rotorachse ist eine solche Schrägstellung der Schneiden nicht unbedingt erforderlich bzw. es genügt, wenn die im Bereich der einlaßseitigen Stirnfläche des Rotors vorgesehenen Schneiden schräg gestellt sind.

Der Rotor kann aus mit Schneiden versehenen Scheiben bestehen, die durch Distanzstücke in Abstand gehalten sind. Diese Scheiben sind vorzugsweise von Zahnscheiben gebildet, deren am Umfang angeordnete Zähne die Schneiden bilden. Wenn eine zumindest teilweise Schrägstellung der Schneiden vorgesehen werden soll, so können bei einer solchen Ausführungsform die Zähne zumindest bei den im Bereich der einlaßseitigen Stirnfläche des Rotors angeordneten Scheiben aus der Scheibenebene herausgehoben sein.

Zweckmäßig nimmt die Anzahl der Zähne pro Zahnscheibe in Richtung zum Auslaß zu, wobei sich vorzugsweise die Zahntiefe bzw. Schneidenlänge in Richtung zum Auslaß verringert. Im Bereich der einlaufseitigen Stirnfläche des Rotors sind dann größere Zähne, die gegebenenfalls auch mehr aus der Scheibenebene herausgedreht werden können, wirksam, während in Richtung zum Auslauf immer kleiner werdende Zahnteilungen und daher eine größere Anzahl von Zähnen, welche gegebenenfalls einen geringeren Anstellwinkel aufweisen oder nicht aus der Scheibenebene herausgebogen sind, die Zerkleinerungsarbeit verbessern.

Es kann aber auch der Rotor aus einem zylindrischen oder konischen Körper bestehen, auf dessen Umfangsfläche die Schneiden bildende Vorsprünge, beispielsweise in Form eines ein- oder mehrgängigen Gewindes bzw. in Form von eingefrästen Rillenvertiefungen, vorgesehen sind. Auf diese Weise entstehen auf der Umfangsfläche des Rotors eine große Anzahl von Schneiden, die gegebenenfalls die gewünschte Schrägstellung und Teilung aufweisen.

Die Schneiden können gehärtet oder hartverchromt sein. Für einige Anwendungsfälle, beispielsweise für die Zerkleinerung von Torfmoor, ist es zweckmäßig, wenn die Schneiden hartmetallbestückt sind.

Der Feinheitsgrad der Zerkleinerung wird u.a. durch die Größe des Zwischenraumes zwischen der Umfangsfläche des Rotors und der gehäusefesten Innenfläche bestimmt. Um diesen Feinheitsgrad ändern zu können, ist gemäß einem weiteren Merkmal der Erfindung der Abstand zwischen der Umfangsfäche des Rotors und der gehäusefesten Innenfläche veränderbar.

Weiters ist es von Vorteil, wenn erfindungsgemäß sowohl die Umfangsfläche des Rotors als auch die gehäusefeste Innenfläche konisch ausgebildet sind, wobei der Durchmesser in Richtung zum Auslaß abnimmt. Dadurch wird die Zerkleinerungswirkung verbessert. Außerdem kann bei dieser Ausführungsform auf einfache Weise durch $R_e$lativverschiebung zwischen der Umfangsfläche des Rotors und der gehäusefesten Innenfläche in Achsrichtung des Rotors der Zwischenraum zwischen diesen Flächen verändert und hiedurch, wie bereits erwähnt, der Feinheitsgrad der Zerkleinerung eingestellt werden.

Eine Ausführung, bei welcher der Durchmesser der Umfangsfläche des Rotors und der gehäusefesten Innenfläche in Richtung zum Auslaß abnimmt, kann auch dadurch erzielt werden, daß erfindungsgemäß die Umfangsfläche des Rotors in Richtung seiner Achse abgestuft ausgebildet ist und daß die gehäusefeste Innenfläche eine entsprechende Abstufung aufweist.

Zweckmäßig ist im Gehäuse ein die gehäusefeste Innenfläche aufweisender Ring eingesetzt. Eine solche Ausführung weist den Vorteil auf, daß der Ring aus einem Material hergestellt werden kann, welches die erforderliche Festigkeit und Härte aufweist, und leicht ausgetauscht werden kann, beispielsweise wenn der Verschleiß einen bestimmten Wert erreicht hat.

Der Feinheitsgrad der Zerkleinerung hängt nicht nur von der Anzahl und Formgebung der Schneiden bzw. Zähne und von der Größe des Zwischenraumes zwischen der Umfangsfläche des Rotors und der gehäusefesten Innenfläche ab, sondern natürlich auch von der Verweilzeit des zu zerkleinernden Gutes in diesem Zwischenraum. Um nun diese Verweilzeit zu verlängern, kann gemäß einem weiteren Merkmal der Erfindung die gehäusefeste Innenfläche mit einem Schraubengewinde versehen sein, dessen Gangrichtung vorzugsweise der Drehrichtung des Rotors entgegengesetzt verläuft. Dieses Schraubengewinde hemmt insbesondere dann, wenn Gangrichtung und Drehrichtung des Rotors entgegengesetzt sind, den Transport des zu zerkleinernden Gutes in axialer Richtung. Gleichzeitig werden durch das Schraubengewinde Gegenschneiden für die Schneiden des Rotors gebildet.

Zum gleichen Zweck kann die gehäusefeste Innenfläche mit abstehenden Vorsprüngen wie Zähnen, Stiften od. dgl. versehen sein, die bei Anordnung von mit Schneiden versehenen/Scheiben weise zumindest teilweise in den Zwischenraum zwischen den Scheiben hineinragen und so verhindern, daß sich das zu zerkleinernde Gut rasch in Richtung zum Auslaß bewegt. Diese Vorsprünge hemmen weiters die Rotation des zu zerkleinernden Gutes, wie sie insbesondere bei leichteren Gütern infolge der hiebei geringeren Fliehkraftwirkung des Rotors auftreten würde. Außerdem bilden auch diese Vorsprünge Gegenschneiden zu den Schneiden des Rotors und bewirken dadurch eine bessere Zerkleinerung des Gutes.

Wie bereits erwähnt, ist es im Rahmen der erfindungsgemäßen Vorrichtung zweckmäßig, die einlaufseitige Stirnseite des Rotors mit einer Vorzerkleinerungseinrichtung zu versehen. Diese Vorzerkleinerungseinrichtung kann erfindungsgemäß aus an der einlaßseitigen Stirnfläche des Rotors angeordneten, von dieser Stirnfläche abstehenden Messern bestehen, die mit an der Innenseite der benachbarten, mit dem Einlaß versehenen Gehäusewand angebrachten, vorzugsweise spiralförmig verlaufenden, Gegenmessern zusammenwirken. Zweckmäßig schließt hiebei die mit den Gegenmessern versehene Gehäusewand mit der Rotorachse einen spitzen Winkel ein, wobei sich der Abstand zur einlaßseitigen Stirnfläche des Rotors nach radial außen verringert. Dadurch ergibt sich bei gleichzeitiger Förderung des zentrisch zugeführten Gutes radial nach außen zur Umfangsfläche des Rotors eine sehr gute Vorzerkleinerung.

Soll eine Zerkleinerung größerer Teile, beispielsweise Maiskolben od. dgl, erfolgen, so ist es zur Beschleunigung des Zerkleinerungsvorganges zweckmäßig, wenn im Zentrum der einlaßseitigen Stirnfläche des Rotors, dem Einlaß gegenüberliegend, Schlagwerkzeuge, beispielsweise Schlagmesser, vorgesehen sind, durch welche eine Vorzerkleinerung dieser großen Teile in einzelne kleinere Teile erfolgt.

Weiters kann erfindungsgemäß die Vorzerkleinerungseinrichtung an der einlaßseitigen Stirnfläche des Rotors angeordnete, von dieser Stirnfläche abstehende Tollen oder Zähne aufweisen. Die Anordnung von Tollen eignet sich insbesondere für die Zerkleinerung von Kartoffeln od. dgl., bei welcher die dosierte Abnahme dieser Materialien durch die Tollen erfolgt. Die Anordnung von Zähnen ist insbesondere dann zweckmäßig, wenn gepreßtes Halmgut zerkleinert werden soll, wobei durch die Zähne eine Abnahme dieses Halmgutes aus dem gepreßten Ballen und eine Vorzerkleinerung erfolgt.

Bei der Verarbeitung trockenen Materiales , z.B. Getreide oder dgl., und insbesondere bei der Verarbeitung von leichten, faserigen Stoffen, z.B. Heu und Stroh, kann es sein, daß die bereits erwähnten Bremselemente (z.B. Schraubengewinde oder Vorsprünge an der gehäusefesten Innenfläche) nicht ausreichen. Um auch bei der Zerkleinerung solcher Materialien eine hinreichende Zerkleinerungswirkung selbst bei relativ kurzer axialer Länge des Rotors zu gewährleisten, können erfindungsgemäß an der gehäusefesten Innenfläche schräg in Richtung zu den Schneiden des Rotors sowie gegebenenfalls in Richtung zur Vorzerkleinerungseinrichtung verlaufende Leitrippen vorgesehen sein. Diese Leitrippen bewirken, daß das sich entlang der gehäusefesten Innenfläche mit großer Geschwindigkeit bewegende zu zerkleinernde Gut abgestoppt und den am Umfang des Rotors befindlichen Schneiden sowie gegebenenfalls der Vorzerkleinerungseinrichtung zugeleitet wird, wodurch diese Schneiden bzw. die Vorzerkleinerungseinrichtung auf das langsam zufließende Material wesentlich wirksamer einwirken. Ohne zusätzlichen Kraftaufwand kann man damit die Durchsatzleistung der Zerkleinerungsvorrichtung bedeutend erhöhen.

Zweckmäßig sind die Leitrippen auf wenigstens einem, vorzugsweise in seiner Lage in Bezug auf das Gehäuse und zum Rotor veränderbaren Ring angeordnet. Diese Ausbildung ergibt den Vorteil, daß die Leitrippen zusammen mit dem Ring auf einfache Weise ausgewechselt werden können, und daß durch Verstellung der Lage des Ringes eine Dosierung des Materialzulaufes zum Mahlrotor erreicht werden kann.

Wenn der Rotor aus mehreren, durch Distanzstücke im Abstand voneinander angeordneten, kreisförmigen oder zylinderförmigen Rotorteilen besteht, z.B. von mehreren, am Umfang mit Schneiden versehenen Scheiben gebildet ist, kann jedem dieser Teile ein gesonderter, entlang einer Ringfläche an der gehäusefesten Innenfläche angeordneter Satz von Leitrippen zugeordnet sein. Jeder Satz von Leitrippen bremst hiebei das zu zerkleinernde Gut ab und lenkt es zum in Förderrichtung nächsten Rotorteil, der dann die weitere Zerkleinerung des Gutes vornimmt. Wie bereits erwähnt, können die einzelnen, in Förderrichtung des zu zerkleinernden Gutes aufeinanderfolgenden Rotorteile eine immer feinere Schneidenausbildung bzw. Zahnteilung aufweisen, damit eine immer feinere Zerkleinerung des Gutes erfolgt, und es kann die Anzahl und die Ausbildung der Leitrippen diesen verschieden ausgebildeten Rotorteilen angepaßt werden. Zweckmäßig ist jeder Satz von Leitrippen -
in Förderrichtung vom Einlaß zum Auslaß gesehen- vor dem
zugehörigen Rotorteil angeordnet, so daß das zu zerkleinernde Gut mit geringer Eigenrotation diesem Rotorteil zugeführt wird. Wie bereits erwähnt, ist es von Vorteil,
wenn die Leitrippen jedes weiteren Satzes in axialer Richtung von einem Rotorteil bis zum benachbarten Rotorteil
verlaufen, wobei gegebenenfalls der erste Satz von Leitrippen bereits im Bereich der Vorzerkleinerungseinrichtung
angeordnet ist, damit zunächst eine Zerkleinerung durch
den einen Rotorteil erfolgt, dann das durch diesen Rotorteil zerkleinerte Gut durch die Leitrippen des nächsten
Satzes den in Förderrichtung nachfolgenden Rotorteil zugeführt wird, um von diesem Rotorteil weiterzerkleinert zu
werden.

Um zu verhindern, daß sich im Zwischenraum zwischen
den Rotorteilen das zu zerkleinernde Gut festsetzt und
dann nicht weiter befördert wird, können erfindungsgemäß
zwischen den Rotorteilen Verdrängungsflügel angeordnet
sein, die vorzugsweise als Distanzstücke dienen oder an den
Distanzstücken befestigt sind. Diese Verdrängungsflügel bewirken, daß das zu zerkleinernde Gut ununterbrochen zu den
Leitrippen gedrängt, dort abgestoppt und ohne große Drehgeschwindigkeit dem nachfolgenden Rotorteil zugeführt wird.

Ferner ist es zweckmäßig, wenn erfindungsgemäß die
Leitrippen mit Gegenschneiden versehen sind, durch welche
die Zerkleinerungswirkung des Rotors unterstützt wird.

Für die Verarbeitung bestimmter Materialien ist es
zweckmäßig, wenn erfindungsgemäß die Leitrippen auf Lochblechringen od. dgl. angeordnet sind, wobei die Lochkanten
als Gegenschneiden die Wirkung des Rotors unterstützen.

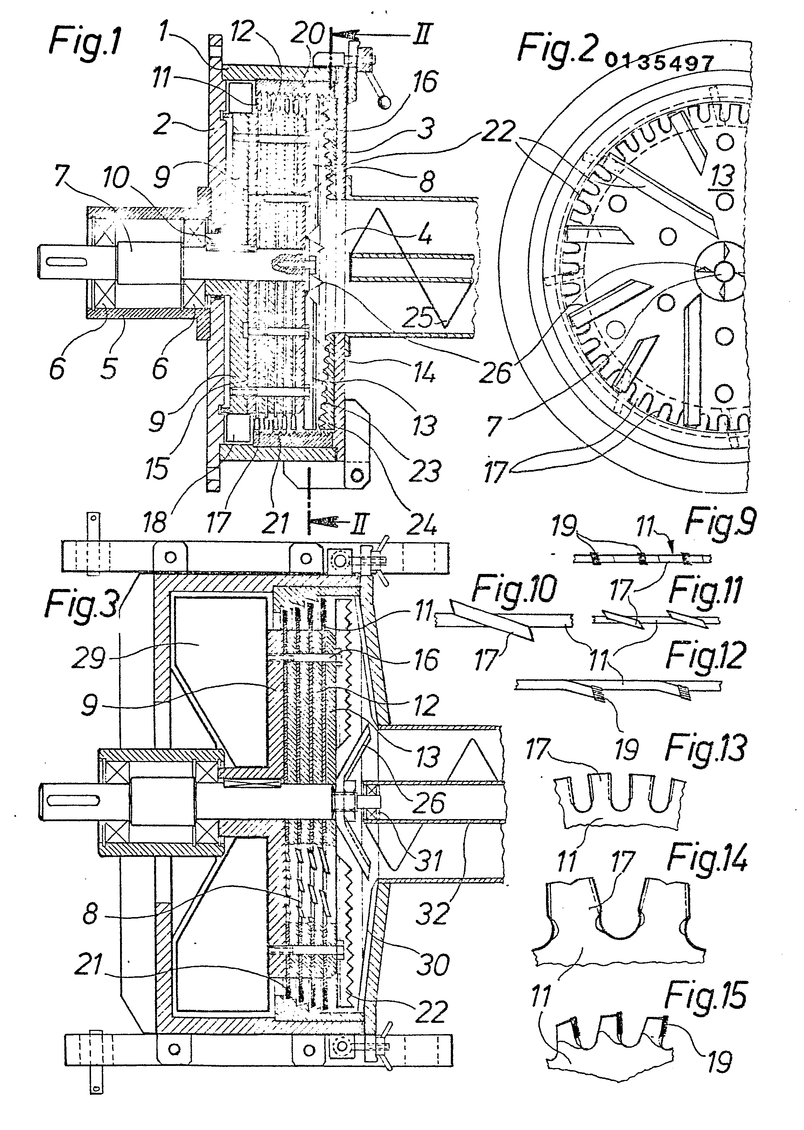

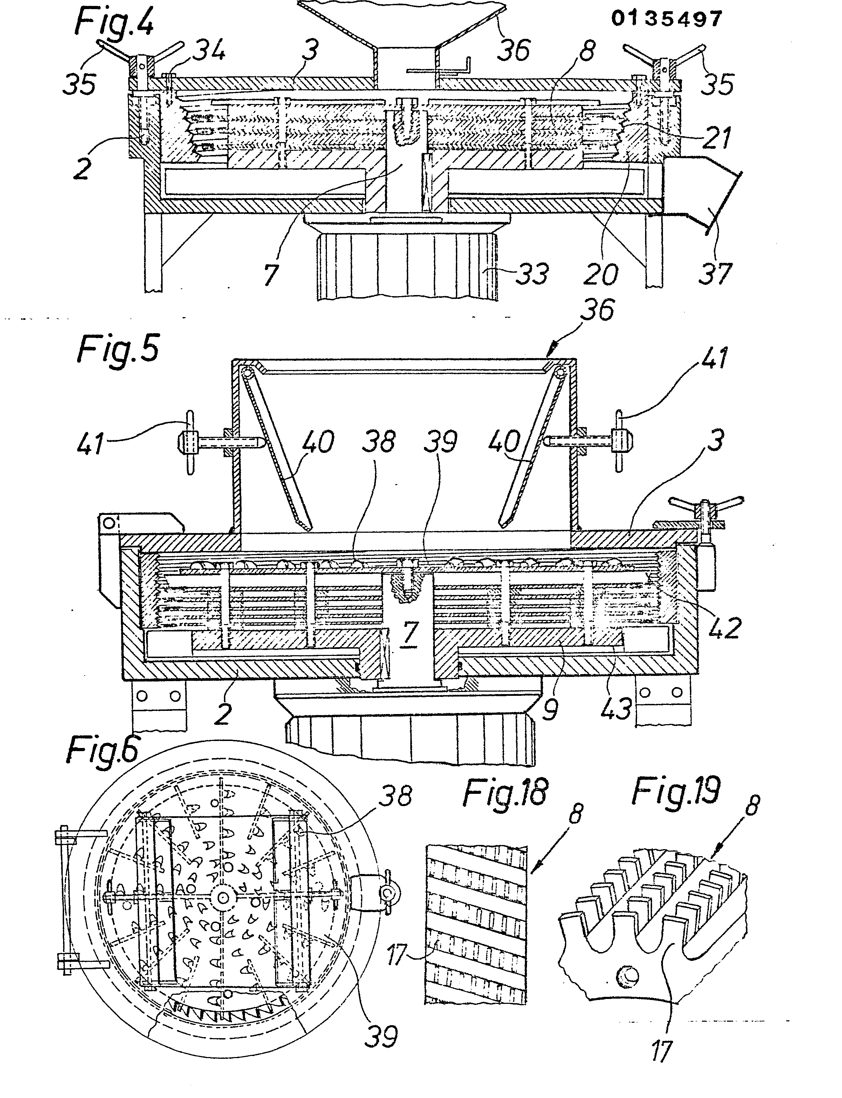

In der Zeichnung ist die Erfindung anhand von Ausführungsbeispielen schematisch dargestellt. Fig. 1 zeigt einen Horizontalschnitt durch eine erfindungsgemäße Zerkleinerungsvorrichtung. Fig. 2 stellt einen Schnitt nach der Linie II - II in Fig. 1 dar. Die Fig. 3 bis 5 zeigen weitere Ausführungsformen einer erfindungsgemäßen Vorrichtung im Vertikalschnitt. Fig. 6 stellt die Ausführungsform nach Fig. 5 in verkleinerter Darstellung in Draufsicht dar.

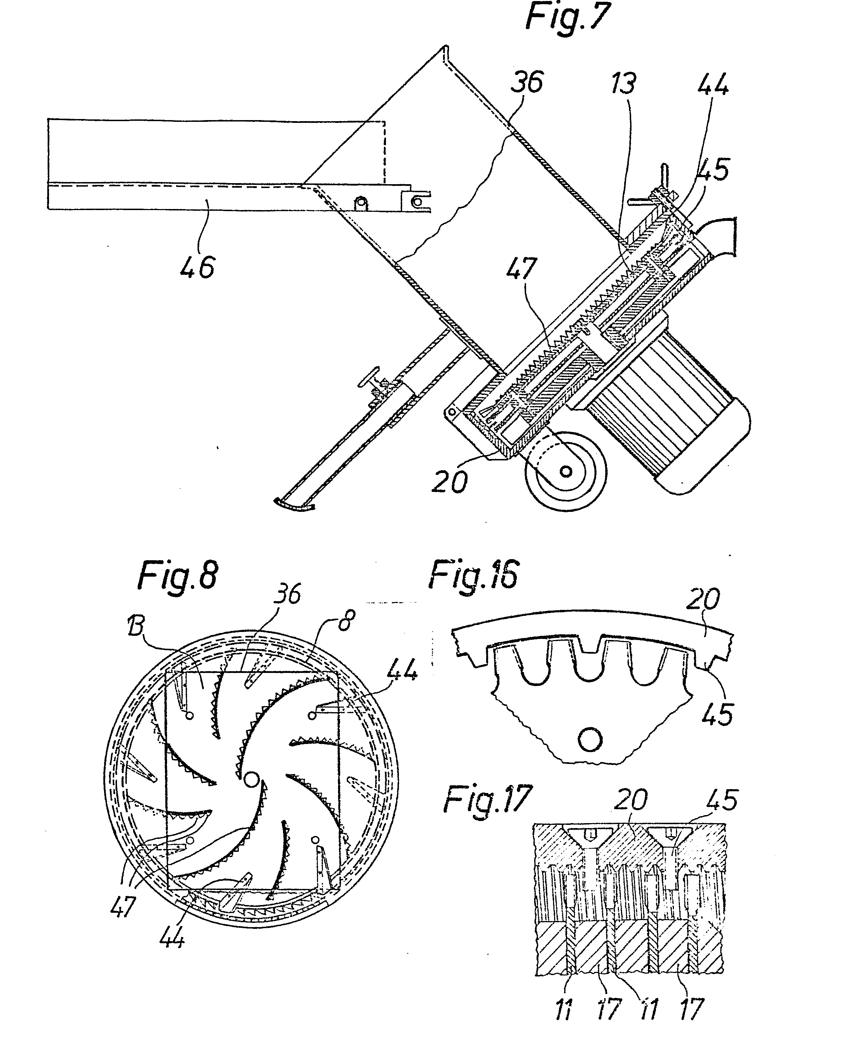

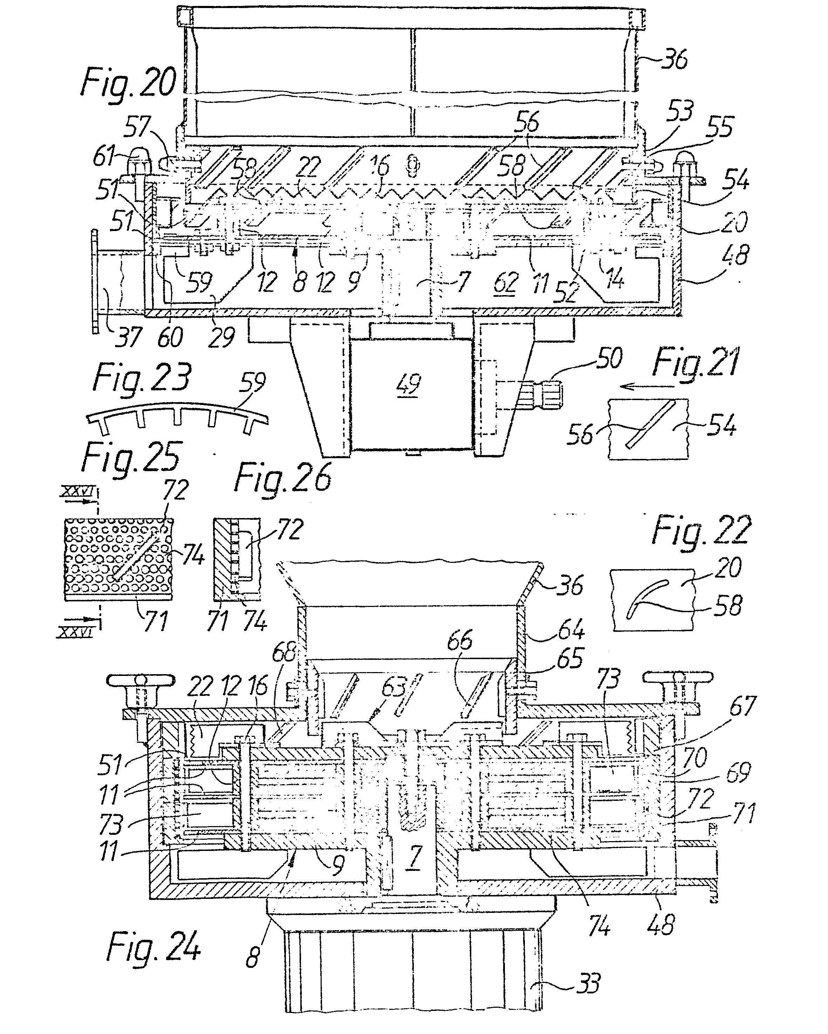

Fig. 7 zeigt eine Ausführungsform der erfindungsgemäßen Vorrichtung beispielsweise für die Zerkleinerung von Halmgut (Stroh und dgl.) im Vertikalschnitt. Fig. 8 stellt eine Draufsicht auf die Vorrichtung nach Fig. 7 mit Blickrichtung in die Zulaufgosse dar. Die Fig. 9, 10, 11 und 12 zeigen einen Teil der Umfangfläche der den Rotor der erfindungsgemäßen Vorrichtung bildenden Zahnscheiben. Die Fig. 13, 14 und 15 stellen jeweils einen die Zähne enthaltenden Ausschnitt solcher den Rotor bildender Zahnscheiben, und zwar eine Ansicht der Scheibenebene, dar. Fig. 16 zeigt das Zusammenwirken zwischen der mit Schneiden versehenen Umfangsfläche des Rotors und der gehäusefesten, mit Vorsprüngen versehenen Innenfläche in Ansicht in Achsrichtung des Rotors. Fig. 17 stellt im Axialschnitt gleichfalls das Zusammenwirken zwischen der Umfangsfläche des Rotors und der gehäusefesten Innenfläche dar. Fig. 18 zeigt eine Ausführungsform der Umfangsfläche eines aus einem zylindrischen Körper bestehenden Rotors in Abwicklung und Fig. 19 stellt einen Teil eines solchen Rotors perspektivisch dar. Fig. 20 zeigt einen Vertikalschnitt durch ein weiteres Ausführungsbeispiel der Zerkleinerungsvorrichtung. Die Fig. 21 und 22 zeigen verschiedene Ausführungsformen der Leitrippen. Fig. 23 stellt ein Detail der Vorrichtung nach Fig. 20 dar. Fig. 24 zeigt eine weitere Ausführungsform einer erfindungsgemäßen Zerkleinerungsvorrichtung ebenfalls im Vertikalschnitt. Fig. 25 zeigt einen Abschnitt eines in die Vorrichtung nach Fig. 24 eingesetzten Lochblechringes mit Leitrippe und Fig. 26 stellt einen Schnitt nach der Linie XXVI - XXVI in Fig. 25 dar.

Die in Fig. 1 dargestellte Zerkleinerungsvorrichtung weist ein Gehäuse auf, das von einem Ringmantel 1, einer Stirnwand 2 und einem Deckel 3 gebildet ist, der zentrisch mit einem Einlauf 4 versehen ist. Das Gehäuse kann von einem Gußkörper oder von einer Stahlkonstruktion gebildet sein.

Mit der Stirnwand 2 ist ein Lagergehäuse 5 mit Lagern 6 verbunden, in welchen eine Welle 7 gelagert ist, die einen Rotor 8 trägt. Der Antrieb der Welle 7 erfolgt in an sich bekannter, nicht näher dargestellter Weise, beispielsweise über eine Riemenscheibe.

Der Rotor 8 besteht beim Ausführungsbeispiel nach Fig.1 aus einer Rotorscheibe 9, die eine mit der Welle 7 drehfest verbundene Nabe 10 aufweist, sowie aus an ihrem Umfang mit Schneiden versehenen Scheiben 11, die durch Distanzstücke 12 voneinander getrennt sind (siehe auch Fig.17). An der einlaßseitigen Stirnseite des Rotors ist eine Vorschneidescheibe 13 vorgesehen. Die Scheiben 11, die Distanzstücke 12 und die Vorschneidescheibe 13 sind über Schrauben 14 mit einer Halteplatte 15 zu einer Einheit verbunden, die als Ganzes ausgewechselt werden kann. Diese Einheit ist mittels Schrauben 16, die gleichfalls Öffnungen in den Scheiben 11, den Distanzstücken 12 und der Vorschneidescheibe 13 durchsetzen, an der Rotorscheibe 9 befestigt.

Die Scheiben 11 sind zweckmäßig als Zahnscheiben ausgebildet, deren Zähne 17, wie die Fig.9 bis 12 zeigen, entweder ungeschränkt (Fig.9) verlaufen, bzw. mehr oder weniger aus der Scheibenebene herausgebogen sind. Zweckmäßig sind nicht alle Zahnscheiben 11 gleich ausgebildet, sondern die Anzahl der Zähne pro Zahnscheibe nimmt vom Einlaß 4 in Richtung zur Rotorscheibe 9 zu, die Zähne werden daher in dieser Richtung kleiner, wobei sich vorzugsweise auch die Zahntiefe bzw. Schneidenlänge entsprechend verringert.

Fig.10 zeigt beispielsweise eine Zahnscheibe 11 im Bereich des Einlasses 4 mit großen Zähnen, Fig.11 eine Zahnscheibe 11 im Bereich der Rotorscheibe 9 mit einer größeren Anzahl kleinerer Zähne.

Die Rotorscheibe 9 ist mit Rippen 18 versehen, durch welche ein Ausstoß des zerkleinerten Gutes zu einem radial angeordneten, nicht dargestellten Auslaß erfolgt.

Bei den Ausführungsformen nach den Fig. 10 und 11 sind die Zähne 17 beidseitig aus der Scheibenebene herausgebogen, so daß jeder Zahn zwei Schneiden aufweist. Diese Ausführung bringt den Vorteil mit sich, daß nach Abnützung der einen Schneide die Scheibe umgedreht werden kann, worauf die andere Schneide zum Einsatz gelangt. Bei der Ausführungsform nach Fig. 9 sind die Zähne nach keiner Seite herausgebogen, während nach Fig. 12 die Zähne 17 nur nach einer Seite aus der Scheibenebene herausgebogen und mit Hartmetall 19 bestückt sind.

Die Fig. 13 und 14 zeigen die Zahnscheiben nach den Fig. 10 und 11, Fig. 15 die Zahnscheibe nach Fig. 12, in Ansicht in Richtung der Rotorachse.

An der Innenseite des Ringmantels 1 ist ein Ring 20 angeordnet, dessen gehäusefeste Innenfläche 21 in geringem Abstand von den von den Zähnen 17 gebildeten Schneiden angeordnet ist und der den Rotor 8 vollständig umschließt. Bei der Ausführungsform nach Fig. 1 ist die Innenfläche 21 des Ringes 20 mit einem Gewinde versehen, dessen Gewindelinien den Transport des zu zerkleinernden Gutes in Achsrichtung des Rotors bremsen und als Gegenschneiden wirken. Es kann aber auch die Innenfläche 21 glatt ausgebildet sein.

Auf der Vorschneidescheibe 13 sind mehrere Messer 22, die verschiedene Form und Länge aufweisen können, befestigt, die eine Vorzerkleinerung des durch den Einlaß 4 zugeführten Gutes bewirken, bevor dieses radial nach außen gefördert wird und in den Bereich der von den Zähnen 17 gebildeten Schneiden des Rotors 8 gelangt. Am Deckel 3 ist eine mit einem Spiralgewinde 23 versehene Prallscheibe 24 befestigt, deren der Vorschneidescheibe 13 zugewendete Fläche derart geneigt ausgebildet ist, daß sich ihr Abstand zur Vorschneidescheibe 13 radial nach außen verringert. Das scharfkantige Spiralgewinde 23 stellt einerseits ein Gegenmesser zu den Messern 22 dar, anderseits bewirkt es die Förderung des durch den Einlaß 4 zugeführten Gutes in Spiralform radial nach außen.

Die Zufuhr des Gutes zum Einlaß 4 erfolgt beispielsweise durch eine Förderschnecke 25. Dem Einlaß 4 gegenüberliegend sind an der Vorschneidescheibe 13 Schlagmesser 26 befestigt, die bei der Zufuhr größerer Stücke, beispielsweise Maiskolben, die Vorzerkleinerung beschleunigen.

Die Ausführungsform nach Fig. 3 unterscheidet sich von der Ausführungsform nach Fig. 1 und 2 vor allem darin, daß die Scheiben 11 unterschiedlichen Durchmesser aufweisen, der vom Einlaß 4 in Richtung zum Auslaß abnimmt, so daß der Rotor 8 abgestuft ausgebildet ist, und daß die Innenfläche 21 des Ringes 20 gleichfalls eine entsprechende Abstufung aufweist. Die Scheiben 11 zusammen mit den Distanzstücken 12 werden bei dieser Ausführungsform direkt durch die Schrauben 16 mit der Rotorscheibe 9 verschraubt. An dieser Rotorscheibe 9 sind Gebläseschaufeln 29 befestigt, durch welche eine Förderung des zerkleinerten Gutes mittels des durch die Gebläseschaufeln erzeugten Luftstromes über eine größere Höhe oder eine größere Distanz möglich ist. Ferner sind die Messer 22 auf der Vorschneidescheibe 13 gezahnt ausgebildet und wirken mit direkt am Deckel 3 angeordneten Gegenkanten 30 zusammen, die gleichfalls spiralförmig angeordnet sein können. Im Zentrum der Vorschneidescheibe 13 befindet sich bei dieser Ausführungsform ein kräftiges Schlagmesser 26, welches die Vorzerkleinerung auch großer Stücke ermöglicht. Ein Ansatz der Rotorwelle 7 mit einem Lager 31 dient zur Abstützung einer gegebenenfalls längeren Schneckenwelle 32.

Fig. 4 zeigt eine Ausführungsform mit vertikaler Rotorwelle 7, die von der Welle eines Elektromotors 33 gebildet ist. Sowohl der Rotor 8, als auch die Innenfläche 21 des Ringes 20 weisen hier eine im wesentlichen konische Form auf, wobei die Innenfläche 21 mit einer Zahnung oder mit konischen Gewindelinien versehen ist. Diese Ausführung bringt gegenüber der abgestuften Ausführung nach Fig. 3 den Vorteil mit sich, daß der Spalt zwischen der von den Schneiden gebildeten Umfangsfläche des Rotors 8 und der Innenfläche 21 des Ringes 20 auf einfache Weise durch Relativverschiebung zwischen dem Rotor 8 und dem Ring 20 in Achsrichtung des Rotors 8 verändert werden kann. Dadurch läßt sich der Feinheitsgrad der Zerkleinerung einstellen. Beim dargestellten Ausführungsbeispiel ist beispielsweise der Ring 20 am Gehäusedeckel 3 mittels Schrauben 34 befestigt. Die Lage des Gehäusedeckels 3 läßt sich gegenüber dem Ringmantel 2 durch Verdrehen von Griffmuttern 35 in Achsrichtung des Rotors 8 verändern, wodurch sich auch eine entsprechende Änderung der Lage des Ringes 20 ergibt. Die Zufuhr des zu zerkleinernden Gutes zur Einlaßöffnung 4 erfolgt bei dieser Ausführungsform über eine Gosse 36, die Abfuhr über einen Stutzen 37.

Die Fig. 5 und 6 zeigen eine Ausführungsform, die insbesondere für die Zerkleinerung von Kartoffeln und ähnlichen Materialien geeignet ist. An der einlaßseitigen Stirnfläche des mit vertikaler Welle 7 angeordneten Rotor 8 ist eine Scheibe 39 befestigt, die mit Tollen 38 besetzt ist. Die Zufuhr des zu zerkleinernden Gutes erfolgt über die Gosse 36, welche bewegliche Wände 40 aufweist, deren Neigung durch Griffschrauben 41 verstellt werden kann, wodurch die zugeführte Menge des zu zerkleinernden Materiales verändert werden kann. Die Tollen 38 dienen zur dosierten Abnahme dieses Materiales, wobei durch diese Tollen zugleich eine Vorzerkleinerung erfolgt. Unterhalb der Scheibe 39 sind mehrere Rippen 42 angeordnet, die das durch die Tollen 38 hindurchtretende Material radial nach außen in den Bereich der Scheiben 11 transportieren. An der Rotorscheibe 9 sind mit geringem Abstand zur Gehäusewand angeordnete, vorzugsweise spiralförmig verlaufende Rippen 43 vorgesehen, die einen Zutritt von feuchtem Gut zu den Lagerstellen des Motors 33 verhindern.

Bei der Ausführungsform nach Fig. 7 ist die Zulaufgosse 36 zusammen mit dem Maschinengehäuse geneigt angeordnet, um die Bauhöhe der Vorrichtung zu verringern. Die Gosse 36 ist vorzugsweise rechteckig ausgebildet, um die Aufnahme von gepreßtem Halmgut zu ermöglichen. Außerdem kann an der Gosse 36 ein Auflagetisch 46 angebracht sein. Zur gleichmäßigen Abnahme des durch die Gosse zugeführten Halmgutmateriales ist die Vorschneidescheibe 13 mit,vorzugsweise auswechselba/ Zähnen 47 versehen. Am äußeren Bereich der  
-ren  
Vorschneidescheibe 13 sind schräg angestellte Messer 44 befestigt, die das Halmgutmaterial vorzerkleinern und den Scheiben 11 zur Zerkleinerung zuführen. Die gehäusefeste Innenfläche 21 des Ringes 20 weist Vorsprünge 45 auf, wodurch die Rotation des Materiales während des Zerkleinerungsvorganges abgebremst wird. Diese Vorsprünge 45 können von in den Ring 20 eingeschraubten Schrauben bestehen (Fig.17) und auch als Gegenschneiden ausgebildet sein.

Fig. 18 zeigt die Abwicklung der Umfangsfläche eines Rotors 8, der aus einem einzigen zylindrischen Teil besteht, in welchen ein ein- oder mehrgängiges Flachgewinde bzw. gerade oder schräg verlaufende Rillenvertiefungen wie bei einem Zahnrad eingefräst sind, so daß eine große Anzahl von die Schneiden bildenden Zähnen entsteht. In Fig. 19 ist ein solcher Rotor schaubildlich dargestellt.

Bei der Vorrichtung nach Fig. 20 ist ein Gehäuse 48 vorgesehen, das ein Getriebe 49 trägt, dessen Eingangswelle 50 von der Zapfwelle eines Traktors angetrieben wird. Die Ausgangswelle des Getriebes 49 bildet die Welle 7, auf der die Rotorscheibe 9 sitzt, die den Rotor 8 trägt. Der Rotor 8 besteht aus zwei kreisförmigen, Schneidblätter bildenden Scheiben 11, die an ihrem Umfang mit Schneiden 51 versehen sind. Die zwischen den Scheiben 11 befindlichen, die Scheiben im vorbestimmten Abstand haltenden Distanzstücke 12 sind von Hülsen gebildet, die von den Schrauben 14, 16 durchsetzt werden, von welchen die Schrauben 16 in Gewindebohrungen des Flansches der Rotorscheibe 9 eingeschraubt sind, wogegen die Schrauben 14 je mit einer Schraubenmutter 52 versehen sind. Die obere, die Schneiden 51 tragende Scheibe 11 weist einen kleineren Durchmesser auf als die untere Scheibe 11, was den Vorteil bringt, daß die untere Scheibe 11 mit an ihrem größeren Umfang mit einer größeren Anzahl von Schneiden 51 besetzt werden kann, um die von den Schneiden 51 der oberen Scheibe 11 vorzerkleinerte Materialmenge ohne Stauung verarbeiten zu können.

Die Gosse 36 kann mittels eines Winkelringes 53 am Gehäuse 48 befestigt sein und zur Zufuhr von Heu- oder Strohballen ausgebildet sein. Diese Ballen werden von einer Vorzerkleinerungseinrichtung erfaßt, welche von an der Stirnfläche der oberen Scheibe 11 vorgesehenen Fräszähnen oder Messern 22 gebildet ist. Am Winkelring 53 ist innen als Fortsetzung der Gosse 36 ein Ring 54 mittels Schrauben 55 befestigt. Der Ring 54 trägt innen schräg verlaufende Leitrippen 56 (Fig.21). Die Schrauben 55 durchsetzen Langlöcher 57 des Ringes 54, so daß dieser in axialer Richtung des Rotors 8 verschoben und dadurch seine Lage und daher auch die Lage der Leitrippen 56 in Bezug auf den Rotor 8 eingestellt und dem zu zerkleinernden Gut angepaßt werden kann. Mit dem Abstand des Ringes 54 zur oberen, die Schneiden 51 tragenden Scheibe 11 kann auch die Durchsatzmenge eingestellt werden, wobei es zweckmäßig ist, wenn der untere Rand des Ringes 54 im Bereich der Schneiden 51 dieser Schneidscheibe 11 verläuft.

Der Rotor 8 läuft entgegen dem Uhrzeigersinn um. Das von den Messern 22 hiebei erfaßte und vorzerkleinerte Gut wird infolge der Zentrifugalkraft nach außen gefördert und durch die Leitrippen 56 abgefangen. Durch die Neigung der Leitrippen 56 wird das Gut den Schneiden 51 der oberen Scheibe 11 zugeleitet, womit die fortlaufende Zerkleinerung des Materiales erfolgt. Durch Verstellung des Ringes 54 läßt sich eine Dosierung, je nach Materialart und vorgesehener Antriebskraft erzielen. Wenn keine besonders feine Materialstruktur des zerkleinerten Gutes gefordert wird, genügt bereits eine einzige, mit Schneiden 51 bestückte Scheibe 11 als einziges Zerkleinerungselement.

Der bereits beschriebene, mit den Scheiben 11 zusammenarbeitende Ring 20 ist ebenfalls in das Gehäuse 48 eingesetzt und trägt ebenfalls schräggestellte Leitrippen 58, deren mögliche Ausführungsform aus Fig.22 ersichtlich ist. Diese Leitrippen 58 sind so ausgebildet, daß das von den Schneiden 51 der Scheibe 11 zerkleinerte und dabei beschleunigte Gut neuerlich abgebremst und den Schneiden 51 der darunterliegenden Scheibe 11 zugeführt wird, die die weitere Zerkleinerung des Gutes durchführen. Durch die zusätzliche Wirkung der unteren Scheibe 11 wird also eine weitere Verfeinerung des zerkleinerten Materials erreicht. Für den Fall, daß ein extrem feines Material gewünscht wird, könnte eine dritte und sogar eine vierte Scheibe 11, gegebenenfalls mit einem weiteren zugehörigen, Leitrippen aufweisenden Ring vorgesehen werden.

Unterhalb des Ringes 20 ist ein ringförmiger Zahnkamm 59 (siehe auch Fig.23) angeordnet, dessen Zähne mit den Schneiden 51 der unteren Scheibe 11 zusammenarbeiten, wodurch eine gleichmäßige Schnittlänge gewährleistet ist. Dieser Zahnkamm 59 ist als auswechselbarer, auf einem ringförmigen Ansatz 60 aufliegender Teil ausgebildet und wird mittels Schrauben 61, mit denen auch die Gosse 36 mit dem Gehäuse 48 verschraubt ist, zwischen dem Ansatz 60 und dem Ring 20 festgeklemmt.

Unter der unteren Scheibe 11 befindet sich ein Sammelraum 62, in welchem die mit dem Rotor 8 verbundenen Gebläseschaufeln 29 rotieren, durch welche das zerkleinerte Gut über den den Auslaß bildenden Stutzen 37 abtransportiert wird.

Bei der Ausführungsform nach Fig.24 erfolgt der Antrieb des Rotors 8 unmittelbar über den Elektromotor 33, ohne Zwischenschaltung eines Getriebes. Es sind drei mit Schneiden versehene Scheiben 11 vorgesehen, welche wiederum über Distanzhülsen 12 und Schrauben 16 miteinander und mit einem Flansch der Rotorscheibe 9 verbunden sind. Der Rotor 8 weist ebenfalls eine Vorzerkleinerungseinrichtung 63 auf, die in einem vorzugsweise verstärkten Fortsatz 64 der Einlaßgosse 36 vorzugsweise mit Vorschneidmessern und im oberen Bereich des Gehäuses 48 mit Messern und Wurfschaufeln wirksam ist. Im verstärkten Fortsatz 64 ist ein Ring 65, der Leitrippen 66 trägt, vorzugsweise verschiebbar, angeordnet, womit wiederum eine Dosierung des Mahlgutzuflusses erreicht werden kann. Die Leitrippen 66 hemmen den Umlauf des zugeführten Materials und führen dieses ständig der Vorzerkleinerungseinrichtung 63 zu. Im oberen Bereich der Gehäuseinnenfläche befindet sich ein weiterer Ring 67, der Leitrippen 68 aufweist, die das vorzerkleinerte und in eine Umlaufbewegung versetzte Gut abbremsen und den Schneiden 51 der obersten Scheibe 11 zuführen. Im Bereich zwischen dieser Scheibe 11 und der mittleren Scheibe 11 befindet sich ein weiterer Ring 69 mit Leitrippen 70, die eine Abbremsung des durch die oberste Scheibe 11 zerkleinerten und in Umlaufbewegung versetzten Gutes bewirken und dieses zur mittleren Scheibe 11 führen. Ein weiterer, mit Leitrippen 72 versehener Ring 71 bewirkt schließlich die Stoppung des von der mittleren Scheibe 11 zerkleinerten Gutes und die Zufuhr zur untersten Scheibe 11.

Zwischen den Scheiben 11 sind Verdrängungsflügel 73 vorgesehen, die an den Distanzhülsen 12 befestigt sind, oder die auch unmittelbar als Distanzstücke dienen können. Durch diese Verdrängungsflügel 73 wird das zwischen die Scheiben 11 gelangende, zu zerkleinernde Gut immer kräftig nach aussen zu den Leitrippen 70, 72 transportiert, welche dann die Zufuhr des Gutes zu den Schneiden 51 der jeweils nächsten Scheibe 11 bewirken.

Für die Feinstzerkleinerung gewisser Materialien ist es von Vorteil, wenn die Mahlrauminnenfläche mit einer Aufrauhung versehen ist. Hiezu kann die gehäusefeste Innenfläche bzw. die Innenfläche der Ringe 67, 69, 71 aus Stahllochblechen 74 bestehen oder es kann die Innenfläche dieser Ringe mit Lochblechen, Stahldrahtgittern od. dgl. belegt sein (Fig. 25, 26). Diese Stahllochbleche oder Stahldrahtgitter liegen jedoch eng an der Gehäuseinnenfläche bzw. an den Innenflächen der Ringe 67, 69, 71 an, so daß das Mahlgut durch die Löcher bzw. Maschen nicht hindurchtreten kann. Diese Lochbleche bzw. Drahtgitter wirken vielmehr lediglich als Gegenschneiden zu den Rotorblättern und üben eine Bremswirkung auf das zu zerkleinernde Gut aus.

Die Scheiben 11 müssen keinen kreisförmigen Umfang aufweisen, es ist auch eine andere, beispielsweise polygonale Begrenzung möglich. Zweckmäßig werden Zahnscheiben verwendet, wobei die einstückig mit dem Scheibenkörper ausgebildeten Zähne die Schneiden 51 bilden, es können jedoch auch gesonderte Schneiden am Umfang der Scheiben 11 befestigt, z.B. angenietet, angeschraubt oder angeschweißt sein. Anstelle der Scheiben können auch zylindrische Teile Verwendung finden.

Patentansprüche:

1. Zerkleinerungsvorrichtung, insbesondere für Futtermittel od. dgl., mit einem an seiner Umfangsfläche Schneiden aufweisenden Rotor, der in einem Gehäuse drehbar gelagert ist, das einen im Bereich der einen Stirnseite des Rotors angeordneten Einlaß und einen Auslaß für das zu zerkleinernde Gut aufweist, dadurch gekennzeichnet, daß eine die Umfangsfläche des Rotors (8) umschließende gehäusefeste Innenfläche (21) für das zu zerkleinernde Gut undurchlässig ausgebildet ist und daß der Auslaß (37) im Bereich der dem Einlaß gegenüberliegenden Stirnfläche des Rotors (8) angeordnet ist, so daß das zu zerkleinernde Gut vom Einlaß (4) im Zwischenraum zwischen der gehäusefesten Innenfläche (21) und der Umfangsfläche des Rotors (8) fortlaufend zerkleinert und zum Auslaß (37) transportiert wird.

2. Zerkleinerungsvorrichtung nach Anspruch 1, dadurch gekennzeichnet, daß die Schneiden zumindest teilweise, vorzugsweise zumindest im Bereich der einlaßseitigen Stirnfläche des Rotors (8), schräg zur Rotorachse verlaufen.

3. Zerkleinerungsvorrichtung nach Anspruch 1 oder 2, dadurch gekennzeichnet, daß der Rotor (8) aus mit Schneiden versehenen Scheiben (11) besteht, die durch Distanzstücke (12) in Abstand gehalten sind.

4. Zerkleinerungsvorrichtung nach Anspruch 3, dadurch gekennzeichnet, daß der Rotor (8) aus Zahnscheiben (11) besteht, deren am Umfang angeordnete Zähne (17) die Schneiden bilden.

5. Zerkleinerungsvorrichtung nach Anspruch 4, dadurch gekennzeichnet, daß die Zähne (17) zumindest bei den im Bereich der einlaßseitigen Stirnfläche des Rotors (8) angeordneten Zahnscheiben (11) aus der Scheibenebene herausgebogen bzw. verdreht sind, so daß in der Laufrichtung hinter den Schneiden ein Freiwinkel gebildet wird (Fig. 10 bis 15).

6. Zerkleinerungsvorrichtung nach Anspruch 4 oder 5, dadurch gekennzeichnet, daß die Anzahl der Zähne (17) pro Zahnscheibe (11) in Richtung zum Auslaß zunimmt, wobei sich vorzugsweise die Zahntiefe bzw. Schneidenlänge in Richtung zum Auslaß verringert.

7. Zerkleinerungsvorrichtung nach Anspruch 1 oder 2, dadurch gekennzeichnet, daß der Rotor (8) aus einem zylindrischen oder konischen Körper besteht, auf dessen Umfangsfläche die Schneiden bildende Vorsprünge vorgesehen sind (Fig. 18, 19).

8. Zerkleinerungsvorrichtung nach Anspruch 7, dadurch gekennzeichnet, daß die Schneiden auf der Umfangsfläche des Rotors (8) entlang einer ein- oder mehrgängigen Schraubenlinie verlaufen (Fig. 18, 19).

9. Zerkleinerungsvorrichtung nach Anspruch 7, dadurch gekennzeichnet, daß auf der Umfangsfläche des Rotors (8) zur Bildung der Schneiden Rillenvertiefungen eingefräst sind (Fig. 18, 19).

10. Zerkleinerungsvorrichtung nach einem der Ansprüche 1 bis 9, dadurch gekennzeichnet, daß die Schneiden hartmetallbestückt (19) sind.

11. Zerkleinerungsvorrichtung nach einem der Ansprüche 1 bis 10, dadurch gekennzeichnet, daß der Abstand zwischen der Umfangsfläche des Rotors (8) und der gehäusefesten Innenfläche (21) veränderbar ist (Fig. 4).

12. Zerkleinerungsvorrichtung nach einem der Ansprüche 1 bis 11, dadurch gekennzeichnet, daß sowohl die Umfangsfläche des Rotors (8) als auch die gehäusefeste Innenfläche (21) konisch ausgebildet sind, wobei der Durchmesser in Richtung zum Auslaß abnimmt (Fig. 4).

13. Zerkleinerungsvorrichtung nach einem der Ansprüche 1 bis 11, dadurch gekennzeichnet, daß die Umfangsfläche des Rotors (8) in Richtung seiner Achse abgestuft ausgebildet ist und daß die gehäusefeste Innenfläche (21) eine entsprechende Abstufung aufweist (Fig. 3).

14. Zerkleinerungsvorrichtung nach einem der Ansprüche 1 bis 13, dadurch gekennzeichnet, daß im Gehäuse ein die gehäusefeste Innenfläche (21) aufweisender Ring (20) eingesetzt ist.

15. Zerkleinerungsvorrichtung nach einem der Ansprüche 1 bis 14, dadurch gekennzeichnet, daß die gehäusefeste Innenfläche (21) mit einem Schraubengewinde versehen ist, dessen Gangrichtung vorzugsweise der Drehrichtung des Rotors (8) entgegengesetzt verläuft (Fig. 1).

16. Zerkleinerungsvorrichtung nach einem der Ansprüche 1 bis 14, dadurch gekennzeichnet, daß die gehäusefeste Innenfläche (21) mit abstehenden Vorsprüngen, wie Zähnen, Stiften (45) od. dgl. versehen ist, die bei Anordnung von mit Schneiden versehenen Scheiben (11) vorzugsweise zumindest teilweise in den Zwischenraum zwischen den Scheiben hineinragen (Fig. 17).

17. Zerkleinerungsvorrichtung nach einem der Ansprüche 1 bis 16, dadurch gekennzeichnet, daß die Stirnseite des Rotors (8) mit einer Vorzerkleinerungseinrichtung (22, 23, 26, 38, 47) versehen ist.

18. Zerkleinerungsvorrichtung nach Anspruch 17, dadurch gekennzeichnet, daß die Vorzerkleinerungseinrichtung aus an der einlaßseitigen Stirnfläche des Rotors angeordneten, von dieser Stirnfläche abstehenden Messern (22, 26) besteht, die mit an der Innenseite der benachbarten, mit dem Einlaß (4) versehenen Gehäusewand (3) angebrachten, vorzugsweise spiralförmig verlaufenden Gegenkanten (23, 30) zusammenwirken (Fig. 1).

19. Zerkleinerungsvorrichtung nach Anspruch 18, dadurch gekennzeichnet, daß die mit den Gegenkanten (23, 30) versehene Gehäusewand (3) mit der Rotorachse einen spitzen Winkel einschließt, wobei sich der Abstand zur einlaßseitigen Stirnfläche des Rotors (8) nach radial außen verringert (Fig. 1).

20. Zerkleinerungsvorrichtung nach Anspruch 17, dadurch gekennzeichnet, daß die Vorzerkleinerungseinrichtung im Zentralbereich der einlaßseitigen Stirnfläche des Rotors (8), dem Einlaß (4) gegenüberliegend, wie an sich bekannt, Schlagwerkzeuge (26), beispielsweise Schlagmesser, aufweist (Fig. 3).

21. Zerkleinerungsvorrichtung nach Anspruch 17, dadurch gekennzeichnet, daß die Vorzerkleinerungseinrichtung an der einlaßseitigen Stirnfläche des Rotors (8) angeordnete, von dieser Stirnfläche abstehende Tollen (38) oder, vorzugsweise spiralförmig verlaufende, Zähne (47) aufweist (Fig. 5, 7).

22. Zerkleinerungsvorrichtung nach einem der Ansprüche 1 bis 21, dadurch gekennzeichnet, daß an der gehäusefesten Innenfläche schräg in Richtung zu den Schneiden (51) des Rotors (8) sowie gegebenenfalls in Richtung zur Vorzerkleinerungseinrichtung verlaufende Leitrippen (56, 58, 66, 68, 70, 72) vorgesehen sind.

23. Zerkleinerungsvorrichtung nach Anspruch 22, dadurch gekennzeichnet, daß die Leitrippen (56, 58, 66, 68, 70, 72) auf wenigstens einem, vorzugsweise in seiner Lage in Bezug auf das Gehäuse und zum Rotor veränderbaren, Ring (20, 54, 65, 67, 69, 71) angeordnet sind.

24. Zerkleinerungsvorrichtung nach Anspruch 22 oder 23, dadurch gekennzeichnet, daß der Rotor (8) aus mehreren durch Distanzstücke (12) in Abstand voneinander angeordneten, scheibenförmigen oder zylinderförmigen Rotorteilen (11) besteht, wobei jedem dieser Rotorteile (11) ein gesonderter, entlang einer Ringfläche an der gehäusefesten Innenfläche (21) angeordneter Satz von Leitrippen (56, 58, 66, 68, 70, 72) zugeordnet ist.

25. Zerkleinerungsvorrichtung nach Anspruch 24, dadurch gekennzeichnet, daß jeder Satz von Leitrippen - in Förderrichtung vom Einlaß (36) zum Auslaß (37) gesehen - vor dem zugehörigen Rotorteil (11) angeordnet ist.

26. Zerkleinerungsvorrichtung nach Anspruch 24 oder 25, dadurch gekennzeichnet, daß die Leitrippen (68, 70, 72) jedes Satzes in axialer Richtung von einem Rotorteil (11) bis zum benachbarten Rotorteil verlaufen, wobei gegebenenfalls der erste Satz der Leitrippen im Bereich der Vorzerkleinerungseinrichtung (63) angeordnet ist.

27. Zerkleinerungsvorrichtung nach Anspruch 24, 25 oder 26, dadurch gekennzeichnet, daß zwischen den Rotorteilen (11) Verdrängungsflügel (73) angeordnet sind, die vorzugsweise als Distanzstücke dienen oder an den Distanzstücken (12) befestigt sind.

28. Zerkleinerungsvorrichtung nach einem der Ansprüche 22 bis 27, dadurch gekennzeichnet, daß die Leitrippen (56, 58, 66, 68, 70, 72) mit Gegenschneiden versehen sind.

29. Zerkleinerungsvorrichtung nach einem der Ansprüche 22 bis 27, dadurch gekennzeichnet, daß die Leitrippen (56, 58, 66, 68, 70, 72) auf Lochblechringen od. dgl. angeordnet sind.

30. Zerkleinerungsvorrichtung nach einem der Ansprüche 1 bis 29, dadurch gekennzeichnet, daß der Auslaß (37) radial zur Umfangsfläche des Rotors (8) verlaufend angeordnet ist.

Fig.1

Fig.2 0135497

Fig.3

Fig.9

Fig.10

Fig.11

Fig.12

Fig.13

Fig.14

Fig.15

0135497

**Fig.4**

35  34  3  36  8  21  2  7  33  20  37

**Fig.5**

41  40  38  39  40  3  41  42  7  43  2  9

**Fig.6**  38  39

**Fig.18**  8  17

**Fig.19**  8  17

0135497

**Fig.7**

36   13   44

45

47

46

20

**Fig.8**   **Fig.16**

36   8   20

B

44   45

47

44

**Fig.17**   20   45

11   17   11   17

0135497

Fig. 20

Fig. 23

Fig. 25

Fig. 26

Fig. 21

Fig. 22

Fig. 24